# EUROPEAN PATENT APPLICATION

(11) **EP 2 680 122 A2**
(43) Date of publication of application: **01.01.2014**
(21) Application number: 13003179.2
(22) Date of filing: 21.06.2013
(51) Int. Cl.: G06F 3/0488, H04M 1/67

(54) **Mobile terminal and control method therefor**

(30) Priority: 26.06.2012 KR 20120068739
(71) Applicant: LG Electronics Inc., Seoul (KR)
(72) Inventor: Jeon, Taeyoung, Seoul (KR); Kang, Raehoon, Seoul (KR); Sohn, Seongki, Seoul (KR); Chi, Jumin, Seoul (KR); Park, Jiyoung, Seoul (KR); Hwang, Inyong, Seoul (KR); Kim, Namki, Seoul (KR)
(74) Representative: Beyer, Andreas

(57) **Abstract**

A mobile terminal capable of performing a touch input and a control method therefor are provided. A mobile terminal includes a display unit and a controller. The display unit displays screen information. The controller receives a control signal for setting the screen information as a locked screen, and controls the display unit so that the screen information is output on the display unit, based on the control signal, when a locked state for limiting the input of a control command for an application.

## Description

### BACKGROUND OF THE INVENTION

### 1. Field of the Invention

The present disclosure relates to a mobile terminal capable of performing a touch input and a control method therefor.

### 2. Description of the Conventional Art

Terminals can be divided into mobile/portable terminals and stationary terminals according to their mobility. The portable terminals can be divided into handheld terminals and vehicle mount terminals according to whether a user directly carries his or her terminal.

As such a mobile terminal becomes multifunctional, the mobile terminal can be allowed to capture still images or moving images, play music or video files, play games, receive broadcast, etc., so as to be implemented as an integrated multimedia player. In order to support and enhance such functions of the terminal, it can be considered to improve configuration and/or software of the terminal.

In the mobile terminal receiving a control command input from a user through a touch screen included therein, a locked state for limiting the user's input of a control command can be performed in order to prevent a user's undesired touch input.

### SUMMARY OF THE INVENTION

Therefore, an aspect of the detailed description is to provide a mobile terminal and a control method therefor, which enables a user to display desired information on a locked screen displayed in a locked state.

To achieve these and other advantages and in accordance with the purpose of this specification, as embodied and broadly described herein, a mobile terminal includes a display unit configured to display screen information; and a controller configured to receive a control signal for setting the screen information as a locked screen, and control the display unit so that the screen information is output on the display unit, based on the control signal, when a locked state for limiting the input of a control command for an application.

In one exemplary embodiment, a graphic objective for receiving the set locked screen may be output on the display unit, and the control signal may be received, based on that the graphic objective selected by a user.

In one exemplary embodiment, when a control command for controlling the screen information is not received from the user for a reference time, the controller may set the locked state, and the control signal may be received, based on that the locked state.

In one exemplary embodiment, the control signal may be received only when the screen information is an execution screen of a predetermined application.

In one exemplary embodiment, the controller may set an execution screen of the application, corresponding to the screen information, as the locked screen.

In one exemplary embodiment, the controller may update the execution screen set as the locked screen so that the user receives update information corresponding to the application.

In one exemplary embodiment, when the application is an application related to position information with which the user identifies the position of the mobile terminal, position information of the mobile terminal, corresponding to a changed position of the mobile terminal, may be updated in real time or at a predetermined time interval on the locked screen.

In one exemplary embodiment, although the locked state is performed, the controller may allow a control command for the application to be received through a region set on the display unit.

In one exemplary embodiment, the control command may be received, based on a touch input.

In one exemplary embodiment, the controller may display the predetermined region to be distinguished from another region so that the user identifies the predetermined region.

In one exemplary embodiment, the controller may capture the screen information in an image form, based on the control signal, and then set the captured image as the locked screen.

In one exemplary embodiment, if the locked state performed after the screen information is set as the locked screen is changed into a released state, the controller may change setting information on the locked screen so that the screen information is no longer displayed on the locked screen.

In one exemplary embodiment, the controller may display a plurality of graphic objectives respectively matched to different screen information on the locked screen, and if a touch input for any one of the plurality of graphic objectives satisfies a release condition, the controller may change the locked state into the released state, and output screen information corresponding to the one graphic objective on the display unit.

In one exemplary embodiment, a first graphic objective of the plurality of graphic objectives may be matched to screen information corresponding to a home screen page, and a second graphic objective of the plurality of graphic objectives may be matched to screen information corresponding to the received control signal.

In one exemplary embodiment, when a touch input for the second graphic objective satisfies the release condition, the controller may execute an application corresponding to the screen information.

In one exemplary embodiment, a graphic objective for controlling illumination of the display unit on the locked screen may be output on the locked screen, and the controller may control a time for which the illumination of the display unit is activated in the locked state, based on the touch input applied to the graphic objective.

In one exemplary embodiment, the control unit may display, on the display unit, the screen information set as the locked screen before the control signal is received, based on the touch input applied in the locked state.

To achieve these and other advantages and in accordance with the purpose of this specification, as embodied and broadly described herein, a control method for a mobile terminal includes displaying screen information on a display unit; receiving a control signal for setting the screen information as a locked screen; outputting the screen information on the display unit rather than a predetermined lock screen image, when a locked state for limiting the input of a control command for an application is performed; and outputting the predetermined lock screen image on the display unit, when the locked state is again performed after the locked state is changed into a released state.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWING

The accompanying drawings, which are included to provide a further understanding of the invention and are incorporated in and constitute a part of this specification, illustrate exemplary embodiments and together with the description serve to explain the principles of the invention.

In the drawings:
- FIG. 1: is a block diagram illustrating a mobile terminal according to an exemplary embodiment;
- FIGS. 2A and 2B: are perspective views illustrating an example of the mobile terminal viewed from the front according to the exemplary embodiment;
- FIG. 3: is a flowchart illustrating a control method for setting a locked screen in the mobile terminal according to an exemplary embodiment;
- FIGS. 4A to 4D: are conceptual views illustrating the control method of FIG. 3 in the mobile terminal according to an exemplary embodiment;
- FIGS. 5A and 5B: are conceptual views illustrating a method for receiving a control signal related to the setting of a locked screen in the mobile terminal according to an exemplary embodiment;
- FIGS. 6A to 6C: are conceptual views illustrating a method for changing a locked screen in the mobile terminal according to an exemplary embodiment;
- FIGS. 7A and 7B: are conceptual views illustrating a method for controlling illumination of a display unit in the mobile terminal according to an exemplary embodiment;
- FIGS. 8A and 8B: are conceptual views illustrating a method for updating a locked screen in the mobile terminal according to an exemplary embodiment;
- FIGS. 9A to 9C: are conceptual views illustrating a method for receiving a control command in a locked state in the mobile terminal according to an exemplary embodiment; and
- FIGS. 10A and 10B: are conceptual views illustrating a method for changing a locked state into a released state in the mobile terminal according to an exemplary embodiment.

### DETAILED DESCRIPTION OF EXEMPLARY EMBODIMENTS

Hereinafter, the present disclosure will be explained in more detail with reference to the attached drawings. For the sake of brief description with reference to the drawings, the same or equivalent components will be provided with the same reference numbers, and description thereof will not be repeated. The suffixes "module" and "unit or portion" for components used in the following description merely provided only for facilitation of preparing this specification, and thus they are not granted a specific meaning or function. If it is regarded that detailed descriptions of the related art are not within the range of the present invention, the detailed descriptions will be omitted. Furthermore, it should also be understood that embodiments are not limited by any of the details of the foregoing description, but rather should be construed broadly within its spirit and scope and it is intended that the present invention cover modifications and variations of this invention provided they come within the scope of the appended claims and their equivalents.

A terminal in the present description may include a mobile terminal such as a portable phone, a smart phone, a notebook computer, a digital broadcasting terminal, Personal Digital Assistants (PDA), Portable Multimedia Player (PMP), a navigation system, a slate PC, a tablet PC and an ultra book. However, it will be obvious to those skilled in the art that the present invention may be also applicable to a fixed terminal such as a digital TV and a desktop computer, except for specific configurations for mobility.

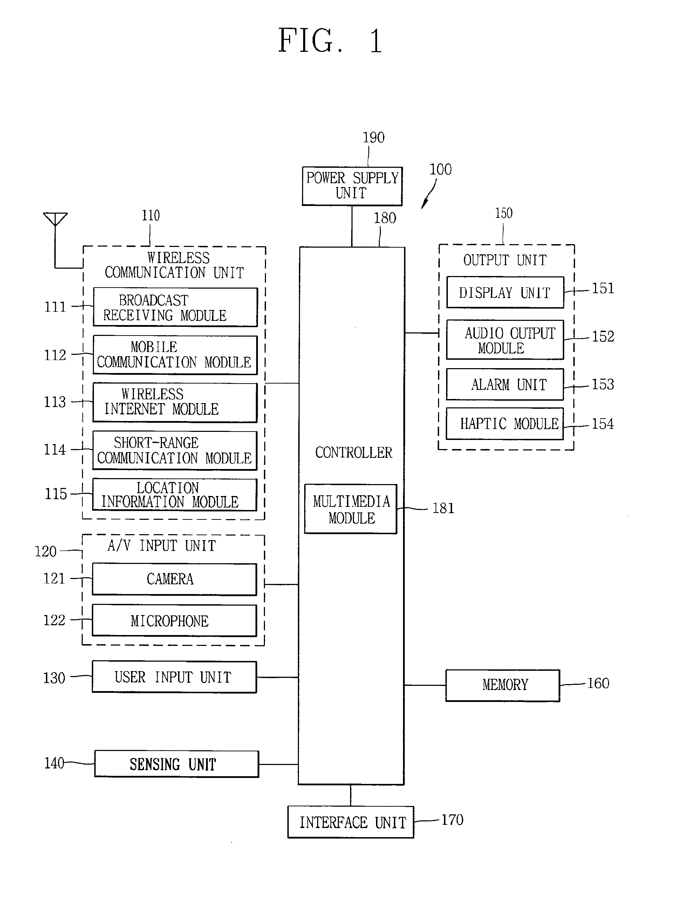

FIG. 1 is a block diagram of a mobile terminal according to an embodiment of the present invention.

As shown in FIG. 1, the mobile terminal 100 includes a wireless communication unit 110, an A/V (Audio/Video) input unit 120, a user input unit 130, a sensing unit 140, an output unit 150, a memory 160, an interface unit 170, a controller 180, and a power supply unit 190. FIG. 1 shows the mobile terminal 100 having various components, but it is understood that implementing all of the illustrated components is not a requirement. The mobile terminal 100 may be implemented by greater or fewer components.

Hereinafter, each of the above components will be explained.

The wireless communication unit 110 typically includes one or more components allowing radio communication between the mobile terminal 100 and a wireless communication system or a network in which the mobile terminal is located. For example, the wireless communication unit may include at least one of a broadcast receiving module 111, a mobile communication module 112, a wireless Internet module 113, a short-range communication module 114, and a location information module 115.

The broadcast receiving module 111 receives broadcast signals and/or broadcast associated information from an external broadcast management server (or other network entity) via a broadcast channel.

The broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast associated information may refer to information associated with a broadcast channel, a broadcast program or a broadcast service provider. The broadcast signal may include a TV broadcast signal, a radio broadcast signal, a data broadcast signal, and the like. Also, the broadcast signal may further include a broadcast signal combined with a TV or radio broadcast signal.

The broadcast associated information may also be provided via a mobile communication network and, in this case, the broadcast associated information may be received by the mobile communication module 112.

The broadcast signal may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may be configured to receive signals broadcast by using various types of broadcast systems. In particular, the broadcast receiving module 111 may receive a digital broadcast by using a digital broadcast system such as multimedia broadcasting-terrestrial (DMB-T), digital multimedia broadcasting-satellite (DMB-S), digital video broadcast-handheld (DVB-H), the data broadcasting system known as media forward link only (MediaFLO^{®}), integrated services digital broadcast-terrestrial (ISDB-T), etc. The broadcast receiving module 111 may be configured to be suitable for every broadcast system that provides a broadcast signal as well as the above-mentioned digital broadcast systems.

Broadcast signals and/or broadcast-associated information received via the broadcast receiving module 111 may be stored in the memory 160.

The mobile communication module 112 transmits and/or receives radio signals to and/or from at least one of a base station, an external terminal and a server. Such radio signals may include a voice call signal, a video call signal or various types of data according to text and/or multimedia message transmission and/or reception.

The mobile communication module 112 is configured to implement a video call mode and a voice call mode. The video call mode indicates a call performed while a user views another party, whereas the voice call mode indicates a call performed while a user does not view another party. For implementation of the video call mode and the voice call mode, the mobile communication module 112 is configured to transceive at least one of voice data and image data.

The wireless Internet module 113 supports wireless Internet access for the mobile communication terminal. This module may be internally or externally coupled to the mobile terminal 100. Here, as the wireless Internet technique, a wireless local area network (WLAN), Wi-Fi, wireless broadband (WiBro), world interoperability for microwave access (WiMAX), high speed downlink packet access (HSDPA), and the like, may be used.

The short-range communication module 114 is a module for supporting short range communications. Some examples of short-range communication technology include Bluetooth™, Radio Frequency IDentification (RFID), Infrared Data Association (IrDA), Ultra-WideBand (UWB), ZigBee™, and the like.

The location information module 115 is a module for acquiring a location (or position) of the mobile communication terminal. For example, the location information module 115 may include a GPS (Global Positioning System) module.

The A/V input unit 120 is configured to receive an audio or video signal. The A/V input unit 120 may include a camera 121 and a microphone 122. The camera 121 processes image data of still pictures or video acquired by an image capture device in a video capturing mode or an image capturing mode. The processed image frames may be displayed on a display unit 151.

The image frames processed by the camera 121 may be stored in the memory 160 or transmitted via the wireless communication unit 110. Two or more cameras 121 may be provided according to the configuration of the mobile communication terminal.

The microphone 122 may receive sounds (audible data) via a microphone in a phone call mode, a recording mode, a voice recognition mode, and the like, and can process such sounds into audio data. The processed audio (voice) data may be converted for output into a format transmittable to a mobile communication base station via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 may generate key input data from commands entered by a user to control various operations of the mobile communication terminal. The user input unit 130 allows the user to enter various types of information, and may include a keypad, a dome switch, a touch pad (e.g., a touch sensitive member that detects changes in resistance, pressure, capacitance, etc. due to being contacted) a jog wheel, a jog switch, and the like.

The sensing unit 140 detects a current status (or state) of the mobile terminal 100 such as an opened or closed state of the mobile terminal 100, a location of the mobile terminal 100, the presence or absence of a user's touch (contact) with the mobile terminal 100 (e.g., touch inputs), the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device.

The output unit 150 is configured to provide outputs in a visual, audible, and/or tactile manner (e.g., audio signal, video signal, alarm signal, vibration signal, etc.). The output unit 150 may include the display unit 151, an audio output module 152, an alarm unit 153, a haptic module 154, and the like.

The display unit 151 may display information processed in the mobile terminal 100. For example, when the mobile terminal 100 is in a phone call mode, the display unit 151 may display a User Interface (UI) or a Graphic User Interface (GUI) associated with a call. When the mobile terminal 100 is in a video call mode or a capturing mode, the display unit 151 may display a captured and/or received image or a GUI or a UI.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of these displays may be configured to be transparent so that outside may be seen therethrough, which may be referred to as a transparent display. A representative example of this transparent display may include a transparent organic light emitting diode (TOLED), etc. The mobile terminal 100 may include two or more display units 151. For example, the mobile terminal may include both an external display unit (not shown) and an internal display unit (not shown). The touch screen may be configured to detect a touch input pressure as well as a touch input location and a touch input area.

The display unit 151 may be implemented in two or more in number according to a configured aspect of the mobile terminal 100. For instance, a plurality of displays may be arranged on one surface integrally or separately, or may be arranged on different surfaces.

Here, if the display unit 151 and a touch sensitive sensor (referred to as a touch sensor) have a layered structure therebetween, the structure may be referred to as a touch screen. The display unit 151 may be used as an input device rather than an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also a touch pressure.

When touch inputs are sensed by the touch sensors, corresponding signals are transmitted to a touch controller (not shown). The touch controller processes the received signals, and then transmits corresponding data to the controller 180. Accordingly, the controller 180 may sense which region of the display unit 151 has been touched.

Referring to FIG. 1, a proximity sensor may be arranged at an inner region of the mobile terminal covered by the touch screen, or near the touch screen. The proximity sensor indicates a sensor to sense presence or absence of an object approaching to a surface to be sensed, or an object disposed near a surface to be sensed, by using an electromagnetic field or infrared rays without a mechanical contact. The proximity sensor has a longer lifespan and a more enhanced utility than a contact sensor.

The proximity sensor may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

In the following description, for the sake of brevity, recognition of the pointer positioned to be close to the touch screen without being contacted will be called a 'proximity touch', while recognition of actual contacting of the pointer on the touch screen will be called a 'contact touch'. In this case, when the pointer is in the state of the proximity touch, it means that the pointer is positioned to correspond vertically to the touch screen.

The proximity sensor detects a proximity touch and a proximity touch pattern (e.g., a proximity touch distance, a proximity touch speed, a proximity touch time, a proximity touch position, a proximity touch movement state, or the like), and information corresponding to the detected proximity touch operation and the proximity touch pattern can be outputted to the touch screen.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function (e.g., a call signal reception sound, a message reception sound, etc.) performed in the mobile terminal 100. The audio output module 152 may include a receiver, a speaker, a buzzer, etc.

The alarm unit 153 outputs a signal for informing about an occurrence of an event of the mobile terminal 100. Events generated in the mobile terminal may include call signal reception, message reception, key signal inputs, and the like. In addition to video or audio signals, the alarm unit 153 may output signals in a different manner, for example, to inform about an occurrence of an event. For example, the alarm unit 153 may output a signal in the form of vibration. Such video signal or audio signal may be output through the display unit 151 or the audio output module 152. Accordingly, the display unit 151 or the audio output module 152 may be categorized into part of the alarm unit 153.

The haptic module 154 generates various tactile effects the user may feel. A typical example of the tactile effects generated by the haptic module 154 is vibration. The strength and pattern of the haptic module 154 can be controlled. For example, different vibrations may be combined to be outputted or sequentially outputted.

Besides vibration, the haptic module 154 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 154 may be implemented to allow the user to feel a tactile effect through a muscle sensation such as fingers or arm of the user, as well as transferring the tactile effect through a direct contact. Two or more haptic modules 154 may be provided according to the configuration of the mobile terminal 100.

The memory 160 may store software programs used for the processing and controlling operations performed by the controller 180, or may temporarily store data (e.g., a map data, phonebook, messages, still images, video, etc.) that are inputted or outputted. The memory 160 may store therein data on vibrations and sounds of various patterns output when a touch is input onto the touch screen.

The memory 160 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

Here, the identification module may be a chip that stores various information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via a port.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

Once a preset condition of the mobile terminal is satisfied, the controlled 180 can execute a locked state for limiting a user's input of control commands with respect to applications. And, the controller 180 can control a locked screen displayed in the locked state, based on a touch input sensed by the display unit (hereinafter, will be referred to as 'touch screen' 151) in the locked state.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein.

Software codes can be implemented by a software application written in any suitable programming language. The software codes may be stored in the memory 160 and executed by the controller 180.

Hereinafter, a structure of the mobile terminal of FIG. 1 according to an embodiment of the present invention will be explained.

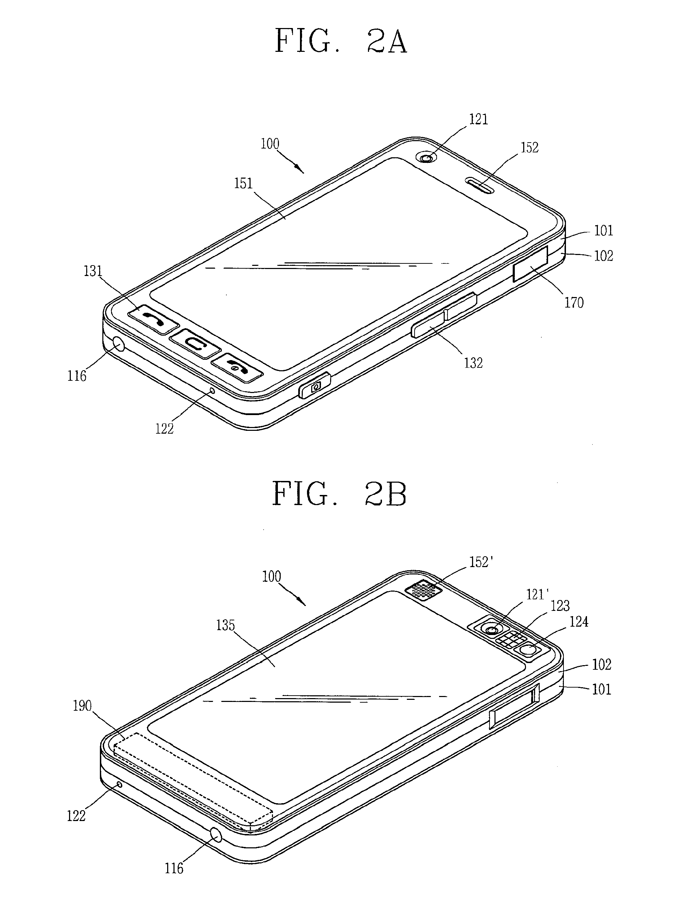

FIG. 2A is a front perspective view of the mobile terminal according to an embodiment of the present invention, and FIG. 2B is a rear perspective view of the mobile terminal according to an embodiment of the present invention

The mobile terminal 100 according to the present disclosure is a bar type mobile terminal. However, the present disclosure is not limited to this, but may be applied to a slide type in which two or more bodies are coupled to each other so as to perform a relative motion, a folder type, or a swing type, a swivel type and the like.

A body of the mobile terminal 100 has a front surface, side surfaces and a rear surface. The body has two ends in a lengthwise direction.

A case (casing, housing, cover, etc.) forming an outer appearance of the body may include a front case 101 and a rear case 102. A space formed by the front case 101 and the rear case 102 may accommodate various components therein. At least one intermediate case may further be disposed between the front case 101 and the rear case 102.

Such cases may be formed by injection-molded synthetic resin, or may be formed using a metallic material such as stainless steel (STS) or titanium (Ti).

At the front case 101, may be disposed a display unit 151, an audio output unit(or an audio output module) 152, a camera 121, user input units 130/131 and 132, a microphone 122, an interface unit 170, etc.

The display unit 151 occupies most parts of a main surface of the front case 101. The audio output unit 152 and the camera 121 are arranged at a region adjacent to one end of the stereoscopic display unit 151, and the user input unit 131 and the microphone 122 are arranged at a region adjacent to another end of the display unit 152. The user input unit 131, the interface unit 170, etc. may be arranged on side surfaces of the front case 101 and the rear case 102. On the other hand, the microphone 122 is arranged at another end of the body.

The user input unit 130 is manipulated to receive a command for controlling the operation of the mobile terminal 100, and may include a plurality of manipulation units 131 and 132. The manipulation units may be referred to as manipulating portions, and may include any type of ones that can be manipulated in a user's tactile manner.

Commands inputted through the first or second user input units 131 and 132 may be variously set. For instance, the first manipulation 131 is configured to input commands such as START, END, SCROLL or the like, and the second manipulation unit 132 is configured to input commands for controlling a level of sound outputted from the audio output unit 152, or commands for converting the current mode of the display unit 151 to a touch recognition mode.

Referring to FIG. 2B, an audio output unit 152' may be additionally disposed at the rear case 102. The audio output unit 152' may implement a stereo function together with the audio output unit 152 (refer to FIG. 2A), and may be used for calling in a speaker phone mode.

A power supply unit 190 for supplying power to the mobile terminal 100 is mounted to the body. The power supply unit 190 may be mounted in the body, or may be detachably mounted to the body.

A touch pad 135 for sensing touch may be additionally mounted to the rear case 102. Like the display unit 151, the touch pad 135 may be formed to be light-transmissive. In this case, if the display unit 151 is configured to output visual information from two surfaces thereof, the visual information can be recognized through the touch pad 135. The information output from the two surfaces can be controlled by the touch pad 135. Alternatively, a display may be additionally mounted to the touch pad 135, so that a touch screen can be disposed at the rear case 102.

A camera 121' may be additionally provided on the rear case 102. The camera 121' faces a direction which is opposite to a direction faced by the camera 121 (refer to FIG. 2A), and may have different pixels from those of the camera 121.

For example, the camera 121 may operate with relatively lower pixels (lower resolution). Thus, the camera 121 may be useful when a user can capture his face and send it to another party during a video call or the like. On the other hand, the camera 121' may operate with a relatively higher pixels (higher resolution) such that it can be useful for a user to obtain higher quality pictures for later use. The cameras 121 and 121' may be installed at the body so as to rotate or pop-up.

A flash 123 and a mirror 124 may be additionally disposed close to the camera 121'. The flash 123 operates in conjunction with the camera 121' when taking a picture using the camera 121'. The mirror 124 can cooperate with the camera 121' to allow a user to photograph himself in a self-portrait mode.

An audio output unit 252' may be additionally arranged on a rear surface of the body. The audio output unit 252' (refer to FIG. 2A) may cooperate with the audio output unit 252 (refer to FIG. 2A) so as to implement a stereo function. Also, the audio output unit may be configured to operate as a speakerphone.

A power supply unit 190 for supplying power to the mobile terminal 100 is mounted to the body. The power supply unit 190 may be mounted in the body, or may be detachably mounted to the body.

The touch pad 135 operates in association with the display unit 151 of the front case 101. The touch pad 135 may be disposed on the rear surface of the display unit 151 in parallel. The touch pad 135 may have a size equal to or smaller than that of the display unit 151.

The controller 180 of the mobile terminal according to the exemplary embodiment, which can include at least one component described above, may perform a locked state for limiting the input of a command control for an application. A locked screen may be output in the locked state, and screen information output on the display unit before the performance of the locked state may be set as the locked screen, based on a user's selection. That is, the screen information output on the display unit before the performance of the locked state may be output as the locked screen in the locked state on the display unit.

An image objective for changing the locked state into a released state may be output on the locked screen.

That is, in a case where the display unit 151 is in an on-state in the locked state, the image objective may be output together with the screen information set as the locked screen on the display unit 151.

The controller 180 releases the locked state in response to a touch gesture for the image objective, and changes the state of the mobile terminal from the locked state into the released state.

Here, the locked state is a state in which the user's input of control commands to applications included in the mobile terminal is limited. The locked state is used to prevent functions and applications of a mobile terminal having a touch screen (or display unit 151 configured with a touch screen) from being activated or non-activated by the user's unintentional input of a control command in the mobile terminal. Thus, in the locked state, the user's input a control command input through the touch screen (or display unit 151) or the user input unit 130 can be limited within a set range.

Meanwhile, although the user's input of the control command is limited in the locked state, the functions and applications of the mobile terminal, which have been operated before the performance of the locked state, may be continuously executed. The released state is a state in which the user's input of control commands to the mobile terminal is not limited. Thus, in the released state, the functions and applications of the mobile terminal are activated or non-activated depending on a control command input by a user through the touch screen (or display unit 151) or the user input unit 130.

Here, the locked state may be performed when the user's input is not sensed by the touch screen (or display unit 151) or the user input unit 130 provided in the mobile terminal for a predetermined time. The predetermined time may be changed depending on the user's setting.

The locked state may be performed when the user presses a special key (e.g., a hold key) provided to the mobile terminal. Here, the special key is previously set to perform the locked state.

As described above, the case where the user's input to the mobile terminal is not sensed for the predetermined time or the case where the user's input for the special key is sensed to perform the locked state can be expressed as 'the locked state is performed when the set condition is satisfied.'

The released state may be performed by the special key again pressed by the user in the locked state or the touch gesture input to the image objective displayed in the locked state.

Meanwhile, the lock screen image (or screen information) displayed on a locked screen in the conventional mobile terminal may be generally a specific image set by a user or controller. Here, the specific image may be a static or dynamic image. Therefore, in a case where a locked state is performed, the same specific image is always output on the locked screen. However, in a case where the locked state is performed while the user executes a specific function through the mobile terminal, the user desires to continuously receive screen information corresponding to the specific function.

Accordingly, in the mobile terminal according to the present disclosure, when a specific function, e.g., a specific application is executed on a screen of the mobile terminal, the execution screen or specific image of the application can be set as a locked screen, based on a user's selection. In a case where the locked state is performed, the set execution screen or specific image can be output on the display unit.

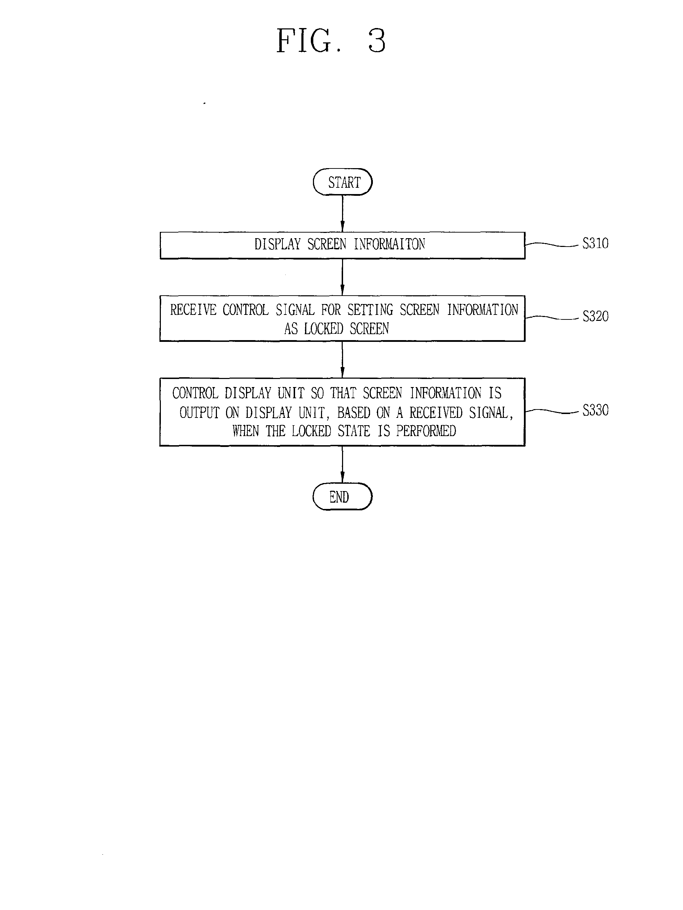

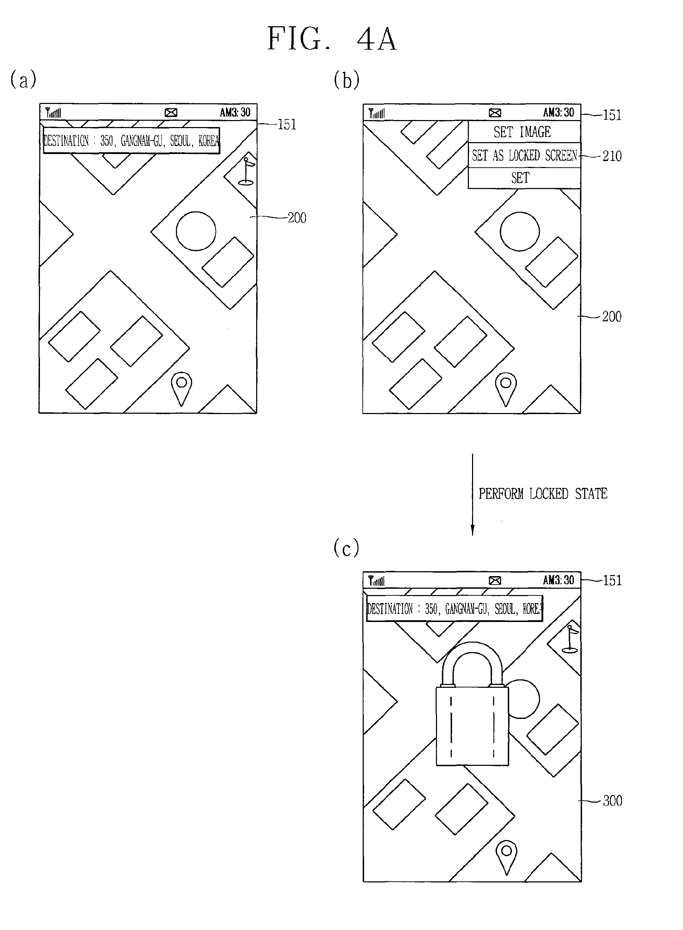

Hereinafter, a method for setting a locked screen will be described in detail with reference to FIGS. 3 and 4A to 4D. FIG. 3 is a flowchart illustrating a control method for setting a locked screen in the mobile terminal according to an exemplary embodiment. FIGS. 4A to 4D are conceptual views illustrating the control method of FIG. 3 in the mobile terminal according to an exemplary embodiment.

First, in the control method according to the exemplary embodiment, screen information is displayed on the display unit 151 (S310).

Here, the screen information may be any one of an execution screen of any one of a plurality of applications, a screen of home screen page and a menu screen. The screen information is output on the display unit 151 in a state in which the mobile terminal is activated, i.e., in a state in which the locked state is not performed.

Meanwhile, the controller 180 may receive a control signal for setting the screen information as a locked screen while the screen information is output on the display unit 151 (S320).

The control signal may be received through various channels. For example, the control signal may be received when a user selects an image objective corresponding to the function of setting the locked screen. Referring to FIG. 4A, while an execution screen 200 of a specific application, e.g., the execution screen 200 of a map-based application is output on the display unit 151 as shown in FIG. 4A (a), the control signal may be received, based on an item 210 "Set as locked screen" for setting the execution screen 200 as the locked screen is selected as shown in FIG. 4A (b).

The item "Set as locked screen," as shown in FIG. 4A (b), may be any one of a plurality of functional items for controlling the execution screen 200. Although not shown, the control signal related to the item "Set as locked screen" may be received through a separate icon output on the execution screen 200.

Meanwhile, in a case where the locked state is performed after the control signal for setting the execution screen 200 as the locked screen is received as described above, the controller 180 controls the display unit 151 so that the execution screen 200 (or screen information) is output on the display unit 151, based on the received control signal (S330).

That is, in the locked state, the controller 180, as shown in FIG. 4A (c), outputs an execution screen (or screen information) 300 set through the process of setting the locked screen, described in FIGS. 4A (a) and (b), on the display unit 151.

As such, screen information (or execution screen) arbitrarily set by the user may be output as the locked screen on the display unit 151, rather than a lock screen image (or moving image) previously set to be output in the locked state.

Meanwhile, in a case where specific screen information is set by the user rather than the previously set lock screen image as described above, the controller 180 may temporarily output the screen information in the locked state and then control the display unit 151 so that the previously set lock screen image is output on the display unit 151.

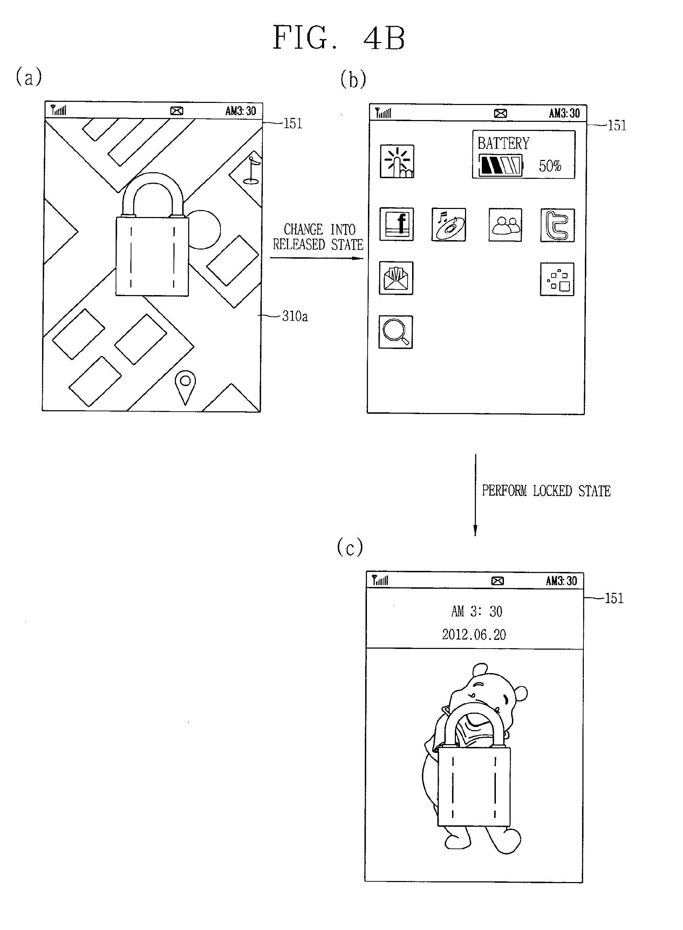

For example, if the locked state is converted into a released state, based on a user's setting while an execution screen 310a of a map application is output as the locked screen as shown in FIG. 4B (a), the controller 180 may change setting information related to the locked screen so that the screen information (or execution screen) is no longer displayed on the locked screen. Therefore, if the locked state is again performed, the controller 180, as shown in FIG. 4B (c), may control the display unit 151 so that the previously set lock screen image is output as the locked screen, rather than the screen information (or execution screen) selected by the user. The setting information related to the locked screen may be set when the control signal for setting the execution screen of the application as the locked screen is received.

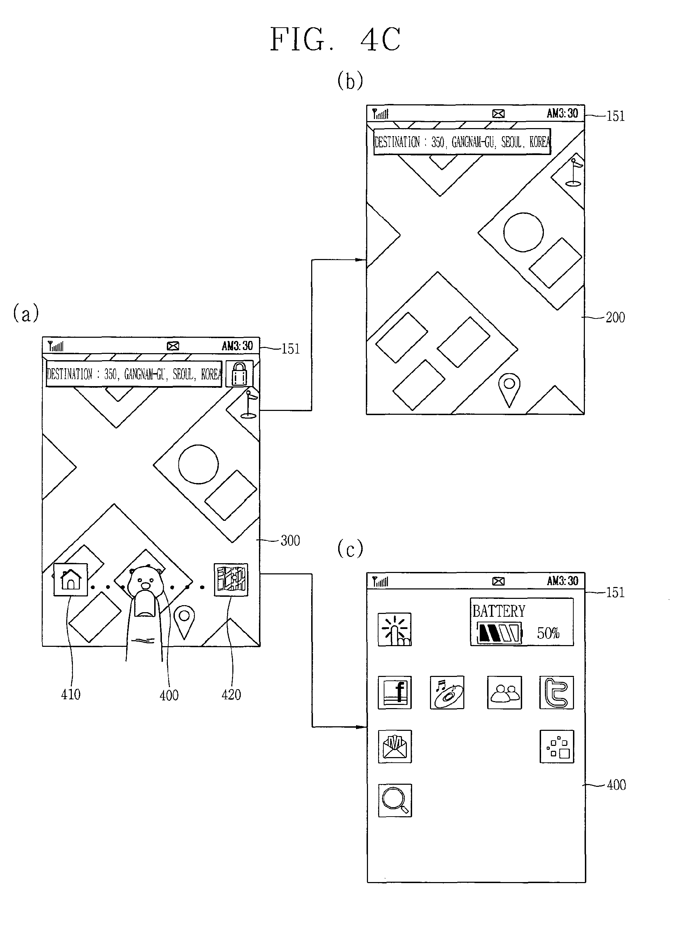

Meanwhile, the controller 180 according to the exemplary embodiment may receive a screen to be output in the locked state, selected by the user, using another method in addition to the method described above. For example, as shown in FIG. 4C (a), a plurality of graphic objectives 410 and 420 respectively matched to different screen information may be output on a locked screen 300. If a touch input for any one of the plurality of graphic objectives 410 and 420 satisfies a release condition for converting the locked state into a released state, the controller 180 converts the locked state into the released state, and outputs screen information corresponding to the graphic objective on the display unit 151. In a case where the screen information corresponding to the graphic objective is an execution screen of an application, the controller 180 may execute the application.

For example, in a case where the touch input for the second graphic objective 420 corresponds to the release condition as shown in FIG. 4C (a), the controller 180, as shown in FIG. 4C (b), outputs screen information 200 matched to the second graphic objective 420 on the display unit 151 in the released state. The controller 180 may execute an application corresponding to the screen information 200, e.g., an application related to position information.

In a case where the touch input for the first graphic objective 410 corresponds to the release condition as shown in FIG. 4C (a), the controller 180, as shown in FIG. 4C (c), outputs screen information 400 corresponding to the home screen page matched to the first graphic objective 410 on the display unit 151 in the released state.

In the mobile terminal according to the exemplary embodiment, the controller 180 converts the locked state into the released state and immediately outputs a screen desired by the user, so that it is possible to an inconvenience that the user should reselect an application to be executed in the released state.

Meanwhile, in the mobile terminal according to the exemplary embodiment, the controller 180 may output the screen information on the locked screen when the screen information corresponds to a predetermined condition, in addition to the method for immediately outputting the screen information on the locked screen in the locked state performed after the control signal for setting the screen information to be displayed on the locked screen is received.

Here, the predetermined condition may be set based on a user's selection. The predetermined condition may be a condition related to ambient environment or state information of the mobile terminal, such as time, weather, position, place or battery capacity of the mobile terminal.

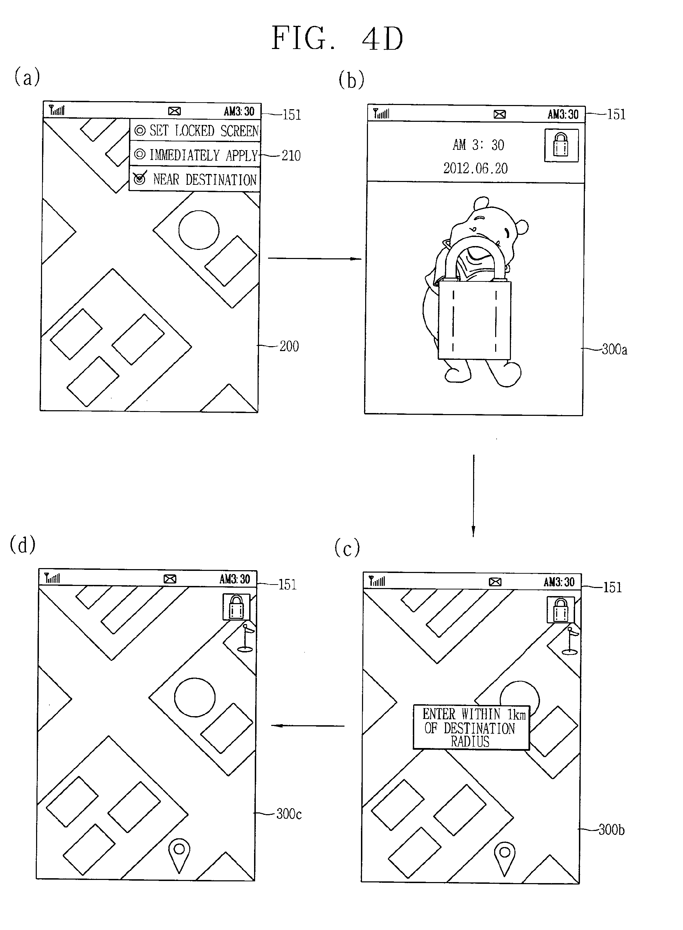

For example, in a case where the predetermined condition is set to "Near destination" by the user while the execution screen 200 of the map application is set as the locked screen as shown in FIG. 4D (a), the controller 180, as shown in FIG. 4D (b), outputs a previously set lock screen image 300a on the locked screen when the mobile terminal 100 is positioned not near the destination. In a case where the mobile terminal is positioned near the destination, the controller 180, as shown in FIG. 4D (c) and (d), outputs execution screens 300b and 300c of the map application on the locked screen.

In this case, the controller 180 may monitor the position of the mobile terminal at a predetermined interval, and may receive, from the user, detailed information related to how far distant from the destination the execution screen is to be output, etc.

As such, in the mobile terminal according to the exemplary embodiment, the controller 180 may output the screen information (or execution screen of the application) set by the user on the locked screen at the time desired by the user.

As described above, in a case where the screen information (or execution screen) selected by the user is set as the locked screen, the controller 180 may temporarily output the screen information on the display unit 151, rather than the previously set lock screen image.

Only when the screen information set by the user satisfies a state of the mobile terminal or when the ambient environment satisfies a specific condition, the controller 180 may control the display unit 151 so that the screen information is output on the display unit 151 in the locked state.

As described above, in the mobile terminal according to the exemplary embodiment, the screen information selected by the user can be arbitrarily set as the locked screen, rather than the previously set lock screen image. Thus, the user can continuously receive the screen information even when the locked state for limiting a control command for an application is performed.

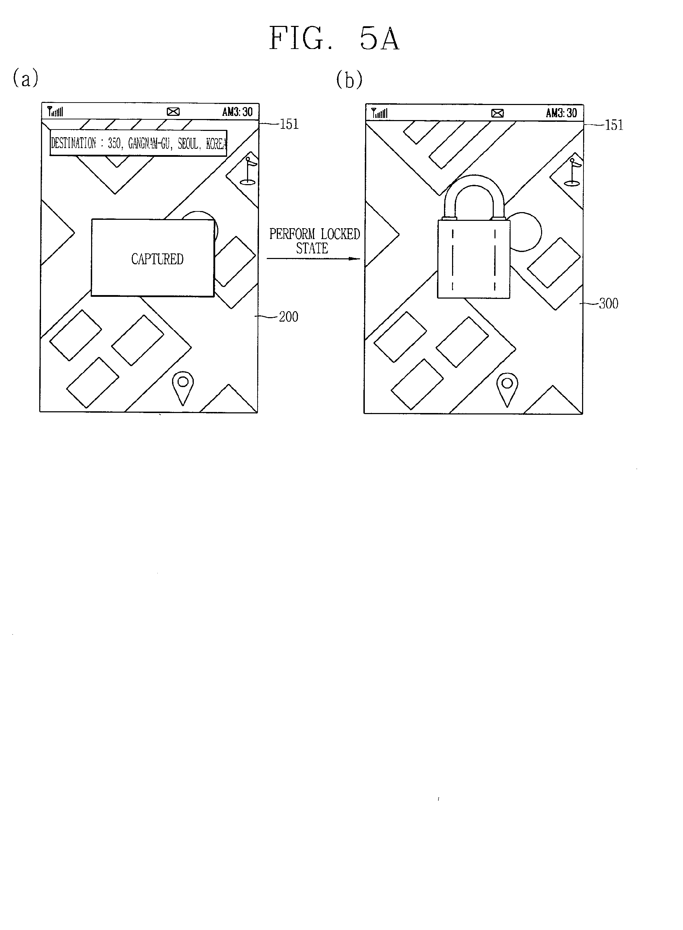

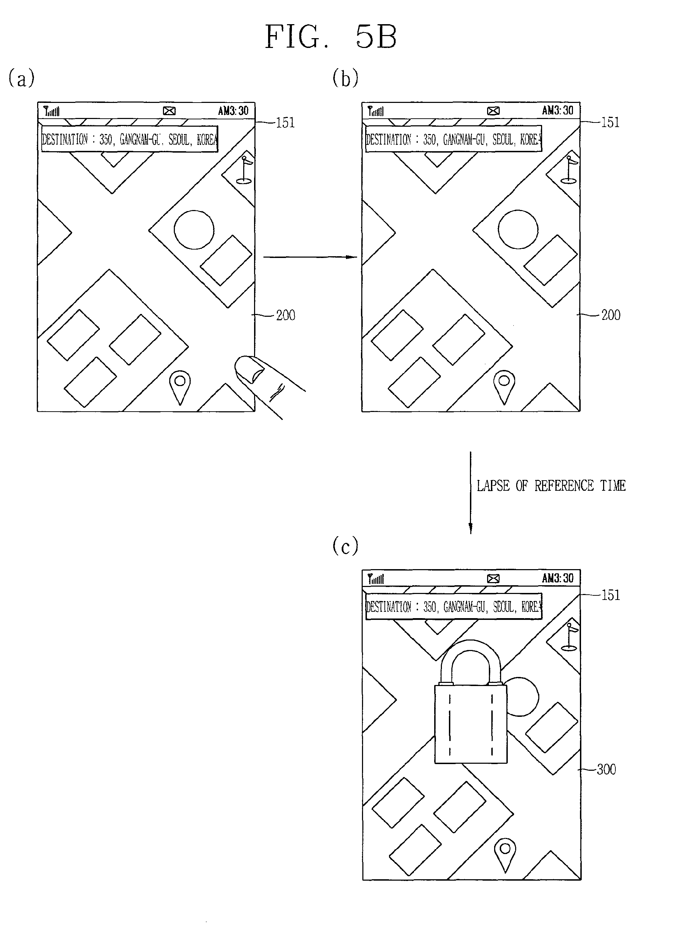

Hereinafter, a method for receiving a control signal for setting screen information on the display unit as a locked screen will be described in detail with reference to FIGS. 5A and 5B. FIGS. 5A and 5B are conceptual views illustrating a method for receiving a control signal related to the setting of a locked screen in the mobile terminal according to an exemplary embodiment.

As an example, in the mobile terminal according to the exemplary embodiment, the controller 180, as described in FIGS. 3 and 4A, may set the screen information output on the display unit 151 as a locked screen, based on that a graphic objective for receiving the set locked screen is selected by a user.

As another example, in a case where a control signal for capturing screen information 200 output on the display unit 151 is received in the released state, the controller 180, as shown in FIGS. 5A (a) and (b), may output the captured image on a locked screen 300.

The control signal the control signal for capturing the screen information 200 may be received, based on at least a touch input to the display unit 151 or a hot key provided to the mobile terminal.

Meanwhile, in addition to the method for outputting the captured screen information 200 in an image form on the locked screen 300, the controller 180, based on the control signal as shown in FIG. 5A (b), may output an execution screen of an application, corresponding to the screen information, on the locked screen 300, based on the control signal. That is, the controller 180 may receive the execution screen of the application provided on the locked screen. Thus, in a case where an event occurs in the application, the user can identify the event in the locked state, even though the locked state is not converted into the released state.

As another example, in a case where a control signal for controlling the mobile terminal is not received from the user for a reference time as shown in FIG. 5B (b) while the control signal is received, based on a user's touch input to the display unit 151 as shown in FIG. 5B (a), the controller 180 may perform a locked state. After the reference time elapses, the controller 180, as shown in FIG. 5B (c), may set the screen information output on the display unit 151 just before the locked state is performed as a locked screen, based on performance of the locked state.

That is, in a case where the control signal for controlling the screen information is not received from the user for the reference time, the controller 180 may perform the locked state and receive a control signal for setting the screen information as the locked screen, based on performance of the locked state. The control signal may be received only when the screen information is an execution screen of an application. Particularly, the control signal may be received only when the screen information is an execution screen of a predetermined kind of application.

Here, the predetermined kind of application may be set according to a user's selection, or may be set according to characteristics of the application.

Meanwhile, the reference time is a time set so that the locked state is performed when a control command is not received for a predetermined time in the mobile terminal. The degree of the reference time may be variously set according to the user's setting.

That is, although the locked state is performed differently from the user's intention, the screen information output on the display unit before the locked state is performed is set as the locked screen, so that the user can continuously receive necessary information even in the locked state.

As described above, in the mobile terminal according to the exemplary embodiment, it is possible to set the screen information output on the display unit as the locked screen, based on the control signal received through various channels.

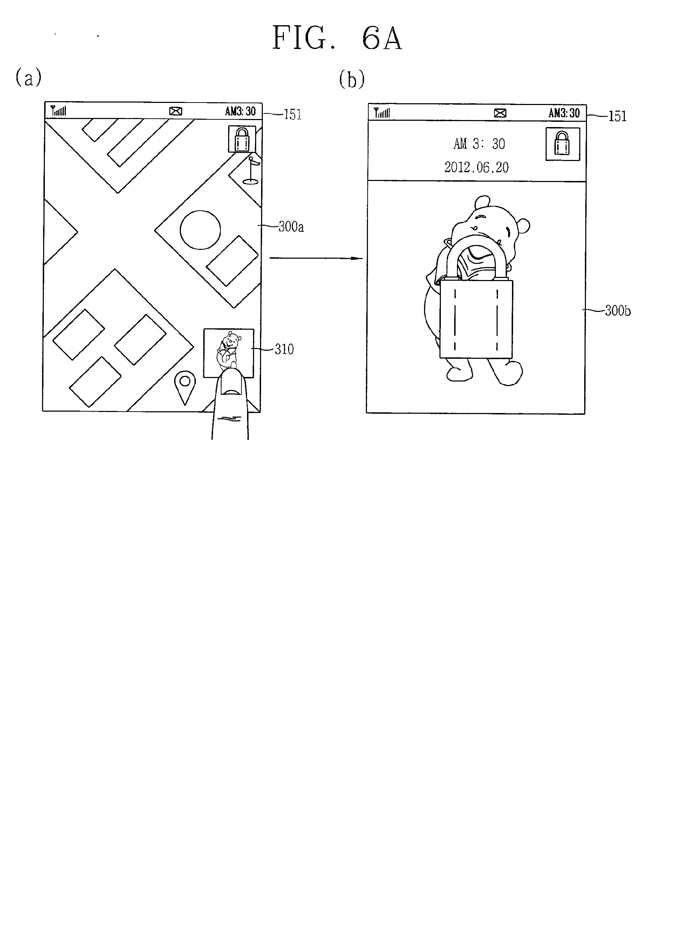

Hereinafter, a method for changing a locked screen will be described in detail with reference to the accompanying drawings. FIGS. 6A to 6C are conceptual views illustrating a method for changing a locked screen in the mobile terminal according to an exemplary embodiment.

As described in FIG. 4B, in the mobile terminal according to the exemplary embodiment, the screen information output on the display unit, e.g., the execution screen of the application is arbitrarily set as the locked screen, and the existing lock screen image is output as a locked screen in the next locked state when the locked state is released, thereby arbitrarily outputting the screen information on the locked screen.

Further, in the mobile terminal according to the exemplary embodiment, the currently output locked screen may be converted into another locked screen in the state in which the locked state is performed.

As an example, as shown in FIG. 6A (a), the controller 180 may output, on the locked screen, a graphic image 310 for outputting a previously set lock screen image on the locked screen, rather than screen information received from a user. The controller 180, as shown in FIG. 6A (b), may output the lock screen image on a locked screen 300b, based on the graphic image 310 being selected by the user. Although not shown in this figure, a graphic objective for outputting screen information 300a set by the user on the locked screen may be output on the locked screen 300b of FIG. 6A (b).

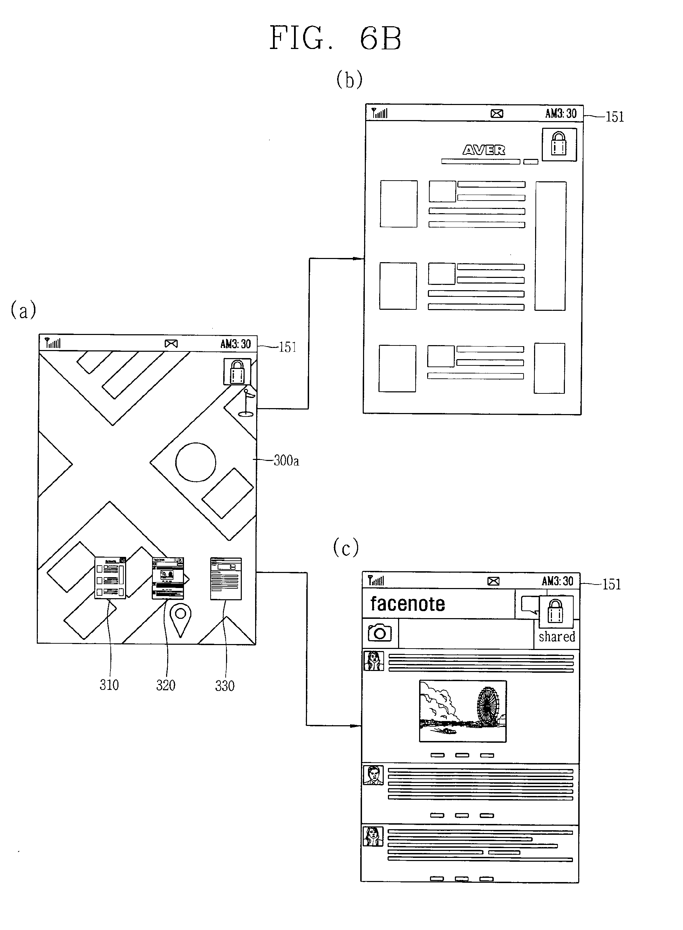

As another example, the controller 180, as shown in FIG. 6B (a), may output thumbnail images (or graphic objectives) 310, 320 and 330 corresponding to the screen information that has been set as the locked screen earlier than a currently output locked screen 300a. If any one of the thumbnail images 310, 320 and 300 is selected by the user, the controller 180, as shown in FIGS. 6B (b) and (c), may display screen information corresponding to the selected thumbnail image on the display unit 151 in the locked state.

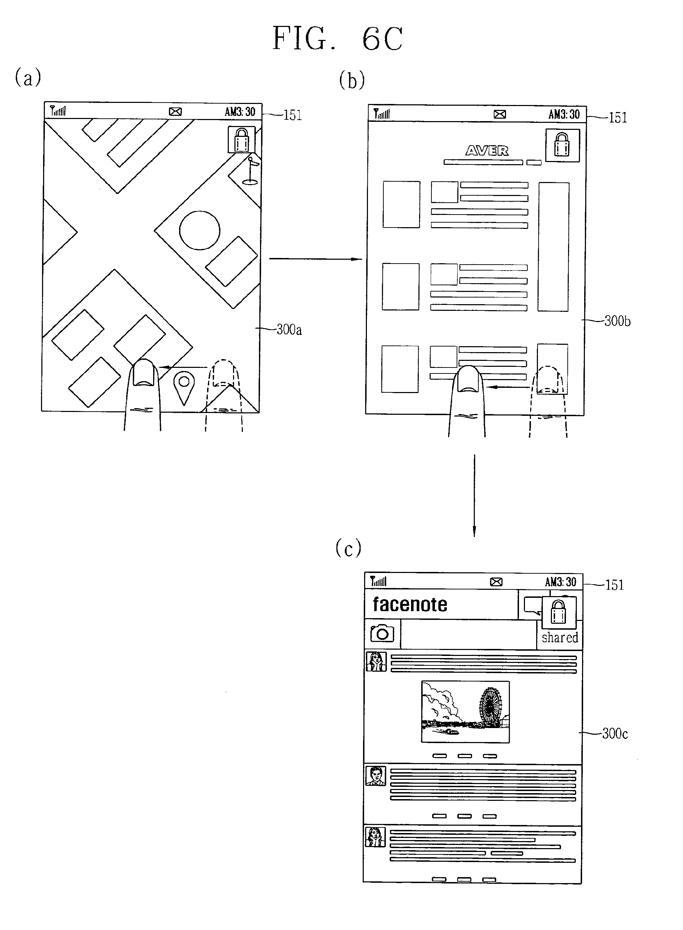

As still another example, the controller 180, as shown in FIGS. 6C (a), (b) and (c), may change the locked screen, based on a touch input applied on the display unit 151 in the locked state, e.g., a flicking touch input or sliding touch input. That is, the controller 180 may convert a currently output locked screen 300a into other locked screens 300b and 300c. Here, the converted locked screen corresponds to the screen information that has been set as the locked screen earlier than the currently output locked screen. That is, the user can receive history information on the screen information that has been set by the user.

As described above, in the mobile terminal according to the exemplary embodiment, it is possible to convert the currently output locked screen in the locked state into another locked screen. Further, it is possible to convert the locked screen using various methods other than the method for applying the touch input on the display unit.

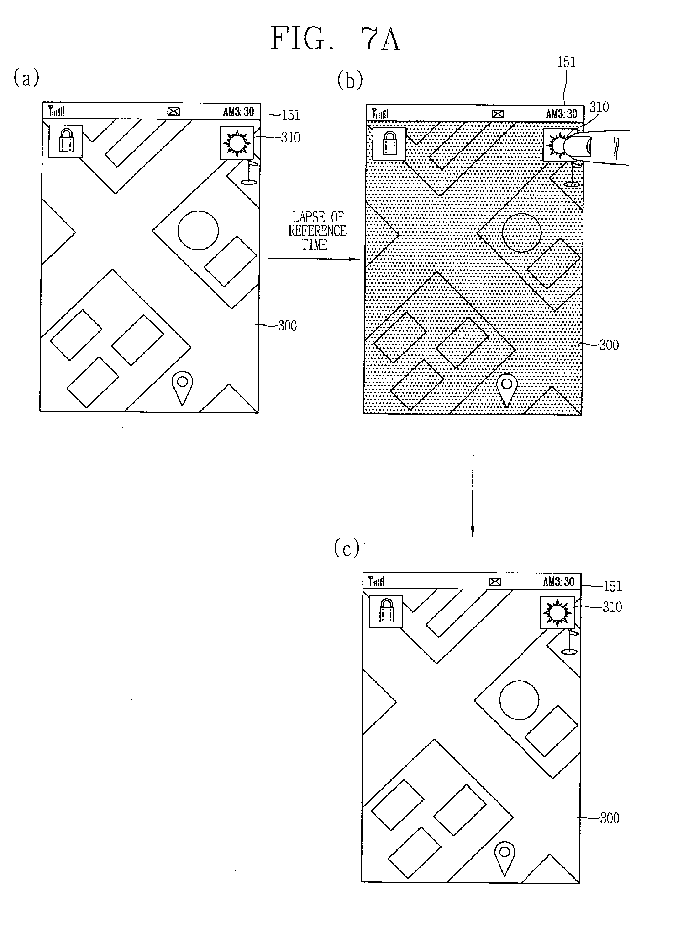

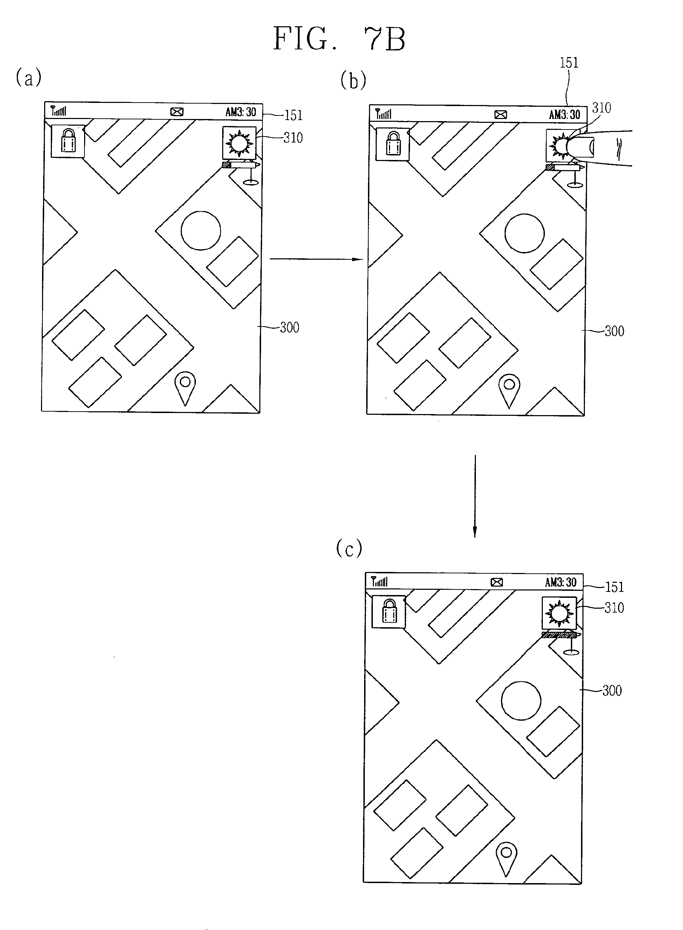

Hereinafter, a method for controlling illumination of the display unit will be described in detail with reference to the accompanying drawings. FIGS. 7A and 7B are conceptual views illustrating a method for controlling illumination of the display unit in the mobile terminal according to an exemplary embodiment.

The controller 180 may allow a locked screen 300 to be identified by a user by maintaining illustration of the display unit 151 for a reference time in the locked state. That is, in a case where the illumination of the display unit 151 is off, the locked state is maintained, but visual information is not displayed on the display unit 151. Here, the time for which the illumination of the display unit 151 is maintained as an on-state in the locked state (or the time for which the illumination of the display unit 151 is activated) may be changed by a user's setting.

Meanwhile, in a case where screen information based on the user's setting is set as the locked screen 300 in the locked state, the user may desire that the illumination of the display unit 151 is maintained longer than the reference time in order to continuously view the screen information. Thus, the controller 180, as shown in FIG. 7A (a), may output an image objective 310 on the locked screen, and control the time for which the illumination of the display unit 151 is on, based on that the image objective 310 is selected by the user.

As an example, in a case where the illumination of the display unit 151 is darkened or off, as shown in FIG. 7A (b), after the reference time elapses, the controller 180, as shown in FIG. 7A (c), may allow the illumination of the display unit 151 to be again brightened or to be converted into the on-state, based on selection of the image objective 310 by the user.

As another example, the controller 180, as shown in FIGS. 7B (a) and (b), may output a progress bar together with the image objective 310 so that the user can identify the time when the illumination of the display unit 151 is off. If the image objective 310 is selected by the user, the indication of the progress bar may be changed as shown in FIG. 7B (c).

In addition to the methods described above, a graphic objective capable of controlling the time when the illumination of the display unit is on may be displayed on the display unit using various methods.

As described above, in the mobile terminal according to the exemplary embodiment, it is possible to provide a function of controlling the illumination of the display unit on the locked screen 300 so that the user can continuously identify information displayed on the locked screen.

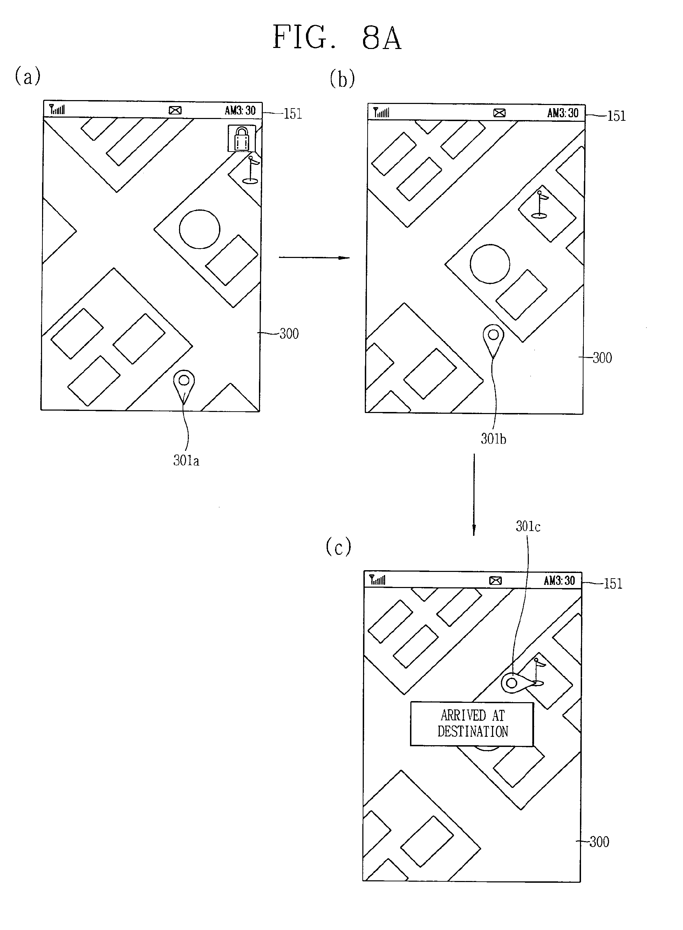

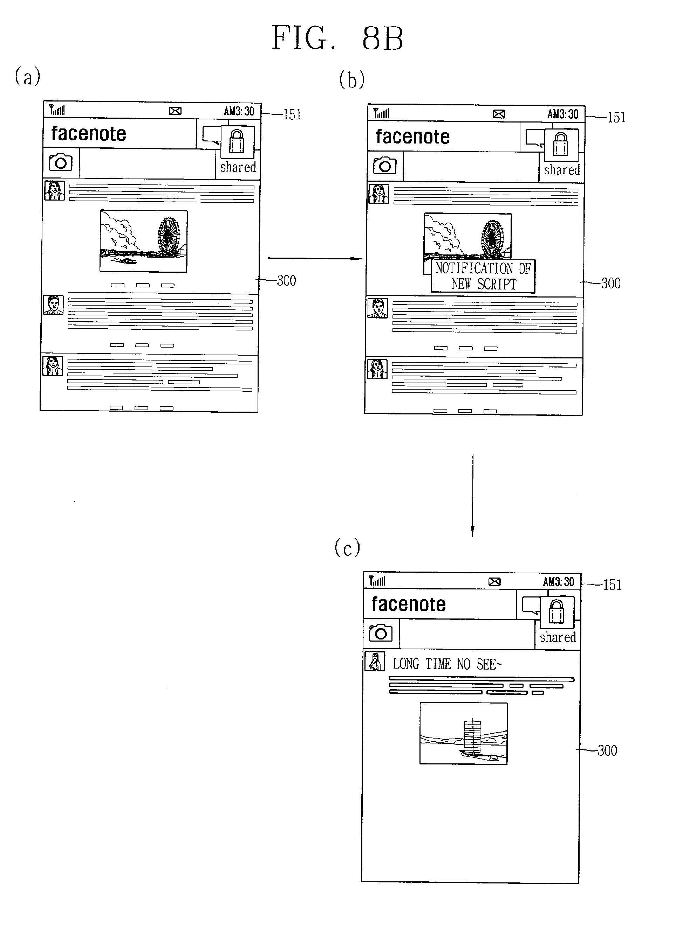

Hereinafter, a method for updating screen information output on a locked screen will be described in detail with reference to the accompanying drawings. FIGS. 8A and 8B are conceptual views illustrating a method for updating a locked screen in the mobile terminal according to an exemplary embodiment.

As described above, in the mobile terminal according to the exemplary embodiment, the controller 180 may control the display unit 151 so that an execution screen of an application is output on the locked screen 300, based on a user's selection. In this case, the controller 180 may output the execution screen output on the display unit 151 at the time when a control signal for setting the locked screen is received in an image form on the locked screen. However, in addition to the image form, the controller 180 may control the display unit 151 so that the execution screen of the application itself is output on the locked screen. That is, information on a progressive state of the application or update information related to the application may be displayed on the locked screen.

As an example, in a case where an execution screen of an application related to position information with which a user can identify the position of the mobile terminal is set as the locked screen 300 as shown in FIG. 8A (a), the controller 180, as shown in FIGS. 8A (b) and (c), may update information corresponding the changed position of the mobile terminal in real time or at a predetermined time interval on the locked screen.

As another example, in a case where an execution screen of an application related to a social network service is set as the locked screen 300 as shown in FIG. 8B (a), the controller 180, as shown in FIGS. 8B (b) and (c), may output an event occurring in the application, e.g., information on an event "Notification of new script" on the display unit 151. Further, the controller 180 may change the locked screen displayed on the display unit 151 so that the user can receive the information on the event "Notification of new script."

As described above, the controller 180 can update the execution screen of the application displayed on the locked screen 300 so that the user can receive update information on the application.

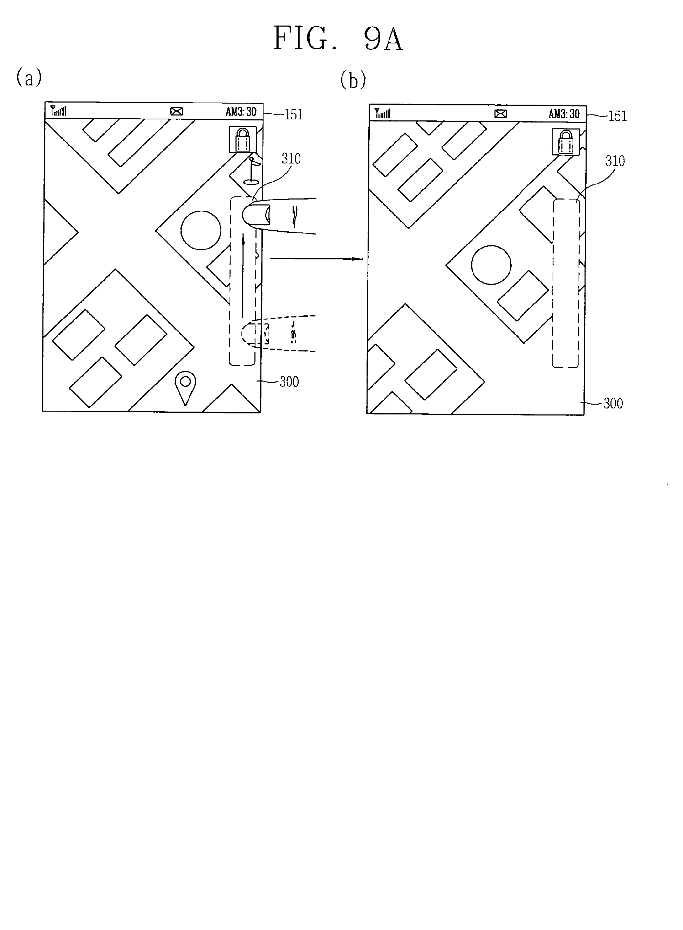

Hereinafter, a method for controlling an application corresponding to screen information on a locked screen in a locked state will be described in detail with reference to the accompanying drawings. FIGS. 9A to 9C are conceptual views illustrating a method for receiving a control command in a locked state in the mobile terminal according to an exemplary embodiment.

Generally, the input of a control command for an application is limited by limiting a touch input applied on the display unit 151 in the locked state. However, in the mobile terminal according to the exemplary embodiment, a control command for controlling an application corresponding to screen information display on the locked screen may be received through a touch input.

Although the locked state is performed, the controller 180, as shown in FIGS. 9A (a) and (b), may allow a control command for an application to be received, only on a predetermined region 310 included in the display unit 151.

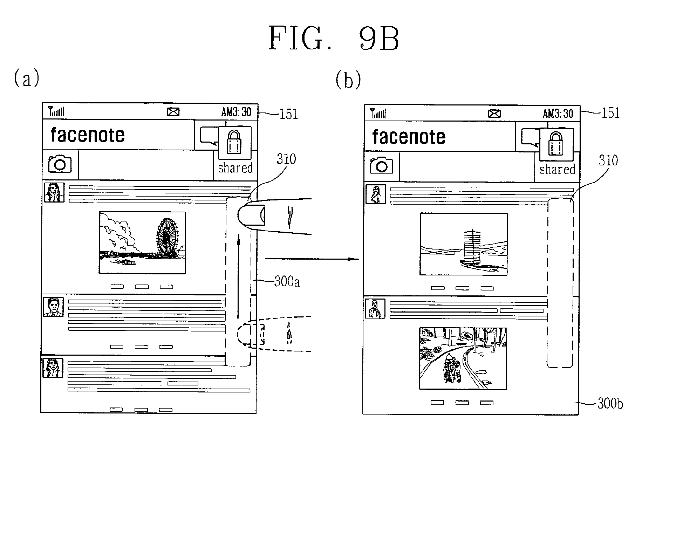

That is, as shown in FIGS. 9A and 9B, an execution screen displayed on the locked screen 300 is scrolled through a touch input on the predetermined region 310, thereby changing the display area of the display unit 151. Although not shown in these figures, the controller 180 may control the execution screen, i.e., the application by enlarging, reducing or changing the execution screen displayed on the locked screen, based on the touch input on the predetermined region 310.

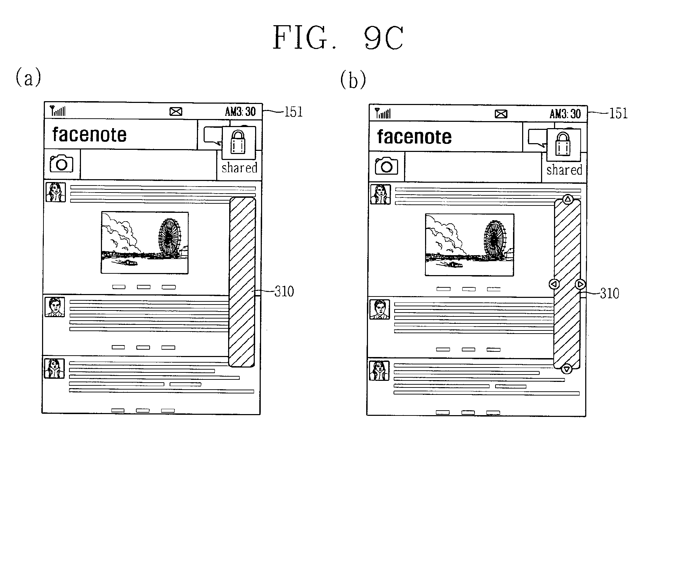

In order to allow the user to identify the predetermined region 310, the controller 180, as shown in FIG. 9C (a), may control the display unit 151 so that another region different from the predetermined region 310 is displayed on the locked screen. That is, the controller 180 may control the display unit 151 so that the visual exterior appearance of the predetermined region 310 is different from that of another region.

The size of the predetermined region 310 may be changed depending on a user's setting. As shown in FIG. 9C (b), the size of the predetermined region 310 may be changed depending on a touch input applied on the locked screen.

As described above, in the mobile terminal according to the exemplary embodiment, the controller 180 can control the application even in the locked state. Thus, it is possible to an inconvenience that the user should change the locked state into the released state so as to apply a control command for an application.

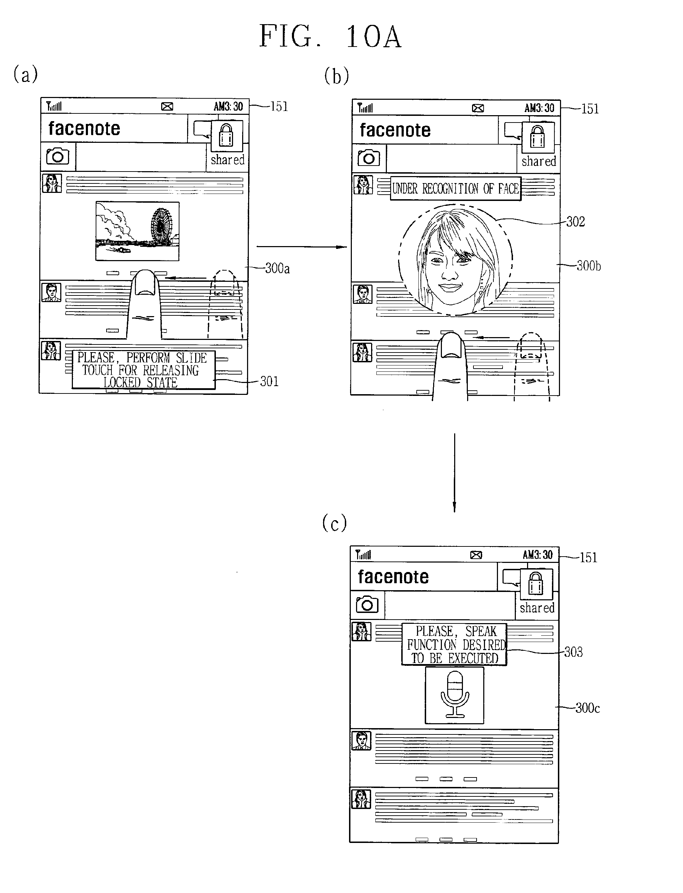

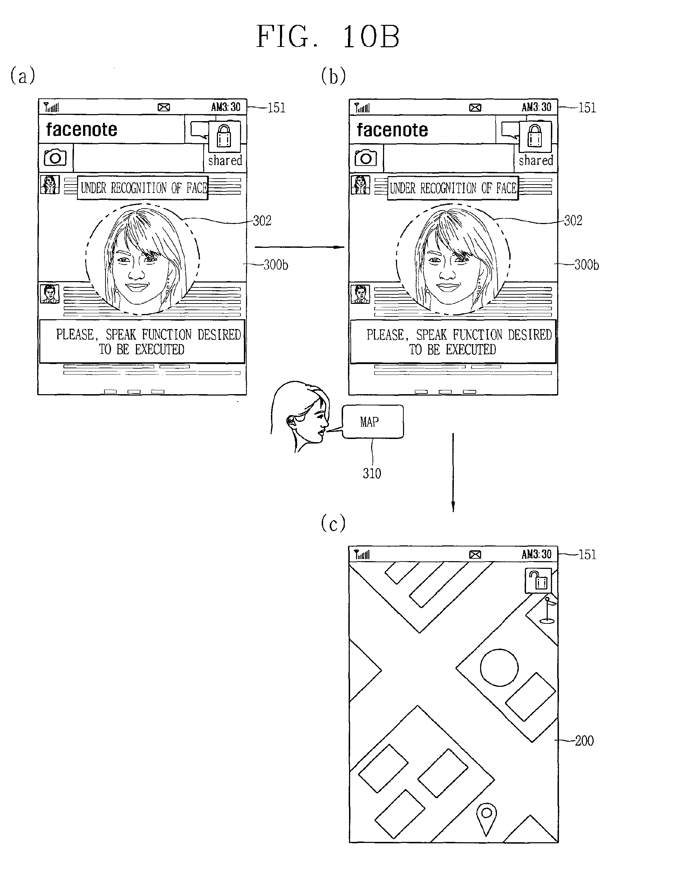

Hereinafter, a method for changing a locked state into a released state in various manners will be described in detail with reference to the accompanying drawings. FIGS. 10A and 10B are conceptual views illustrating a method for changing a locked state into a released state in the mobile terminal according to an exemplary embodiment.

In the mobile terminal according to the exemplary embodiment, the method for changing the locked state into the released state while the locked state is being executed may be changed depending on a user's selection.

For example, the controller 180, as shown in FIG. 10A (a), may change the locked state into the released state, based on a touch input on the display unit 151. In this case, the controller 180, as shown in FIG. 10A (b), may change the method for releasing the locked state, based on a touch input corresponding to a predetermined method on the display unit 151, e.g., a flicking or sliding touch input. As an example, the controller 180 may release the locked state through a face recognition method rather than the touch input. If the touch input corresponding to the predetermined method on the display unit 151 is again applied, the controller 180, as shown in FIG. 10A (c), may again change the method for releasing the locked state. In this case, the controller 180 may change the locked state into the released state through voice recognition. The controller 180 may recognize a function to be executed through voice or the name of an application together with the voice recognition, so that it is possible to release the locked state and immediately execute the recognized function or application.

The controller 180, as shown in FIGS. 10B (a), (b) and (c), may simultaneously receive a function to be executed or voice for an application together with a control command for releasing the locked state. For example, the controller 180 may recognize the function to be executed or the name of the application through the voice applied from the user, so that it is possible to release the locked state and simultaneously execute the recognized function or application.

As described above, in the mobile terminal according to the exemplary embodiment, various methods for releasing the locked state can be provided in the locked state so that the user can release the locked state using a suitable method according to the user's situation. Further, in the mobile terminal according to the exemplary embodiment, the locked state is released, and simultaneously, a user's desired function or application is executed, so that it is possible to save a time for which the user applies a separate control command for performing the desired function after releasing the locked state.

In the mobile terminal and the control method therefor according to the exemplary embodiments, an execution screen of an application can be set as the locked screen. Thus, the user can receive information necessary for the user through the execution screen of the application, set as the locked screen, even in the locked state.

In the mobile terminal and the control method therefor according to the exemplary embodiments, the execution screen of the application, set as the locked screen, is updated, thereby providing up-to-date information to the user.

According to exemplary embodiments, the aforementioned methods can be embodied as computer readable codes on a computer-readable recording medium. Examples of the computer readable recording medium include a ROM, RAM, CD-ROM, magnetic tapes, floppy disks, optical data storage devices, and carrier waves (such as data transmission through the Internet).

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal, comprising:
a display unit (151) configured to receive inputs and display information; and
a controller (180) configured to:
receive a control signal for setting a lock state of a screen of the display unit (151), the lock state limiting input of a control command for an application being executed; and
control the display unit (151) to set the lock state of the screen and display locked screen information in response to the control signal.

2. The mobile terminal of claim 1, wherein the controller (180) is further configured to control the display unit to set the locked screen information to information displayed on the screen when the control signal is received.

3. The mobile terminal of claim 2, wherein the controller is further configured to:
capture an image of information displayed on the screen when the control signal is received; and
control the display unit (151) to set the captured image as the locked screen information.

4. The mobile terminal of claim 1, wherein the controller (180) is further configured to control the display unit to:
display a graphic for selecting the locked screen information; and
set the locked screen information in response to selection of the graphic.

5. The mobile terminal of claim 1, wherein the control signal is generated when no user input is received on the screen for a predetermined time interval.

6. The mobile terminal of claim 1, wherein the controller (180) is further configured to control the display unit to set the locked screen information to an execution screen of the application.

7. The mobile terminal of claim 6, wherein the controller (180) is further configured to control the display unit to update the execution screen set as the
locked screen information during the lock state such that updated information corresponding to the application is displayed.

8. The mobile terminal of claim 7, wherein the controller is further configured to control the display unit (151) to update the execution screen set as the locked screen information in real time or at a predetermined interval.

9. The mobile terminal of claim 1, wherein the controller is further configured to control the display unit (151) to allow a control command for the application to be received via a specific region on the screen while the lock state is set.

10. The mobile terminal of claim 9, wherein the control command is received via on a touch input on the specific region.

11. The mobile terminal of claim 9, wherein the controller is further configured to control the display unit (151) to display the specific region to be distinguished from other regions on the screen.

12. The mobile terminal of claim 1, wherein the controller is further configured to:
control the display unit (151) to display a plurality of graphics on the screen during the lock state, each of the plurality of graphics corresponding to different screen information;
process a touch input to select one of the plurality of graphics, the touch input satisfying a release condition; and
control the display unit (151) to release the locked state of the screen and display information corresponding to the selected one of the plurality of graphics on the screen.

13. The mobile terminal of claim 12, wherein:
the touch input is received on a specific one of the plurality of graphics that corresponds to screen information of the received control signal; and
the controller (180) is further configured to execute an application corresponding to the screen information of the received control signal in response to the touch input.

14. The mobile terminal of claim 1, wherein the controller is further configured to:
control the display unit (151) to display a graphic for controlling illumination of the display unit on the locked screen;
process a touch input to the displayed graphic; and
illuminate the display unit (151) during the locked state of the screen based on the touch input.

15. A method for controlling a mobile terminal, the method comprising:
displaying information on a display unit (151) of the mobile terminal;
receiving a control signal for setting a lock state of a screen of the display unit, the lock state limiting input of a control command for an application being executed; and
setting the lock state of the screen and displaying locked screen information in response to the control signal.
